# EUROPEAN PATENT APPLICATION

(11) **EP 1 343 163 A2**
(43) Date of publication of application: **10.09.2003**
(21) Application number: 03004884.7
(22) Date of filing: 06.03.2003
(51) Int. Cl.: G11B 20/00, G11B 20/10

(54) **Information recording medium, authenticity checking and reading method therefor**

(30) Priority: 06.03.2002 JP 2002061055
(71) Applicant: VICTOR COMPANY OF JAPAN, LIMITED, Yokohama-Shi Kanagawa-Ken 221 (JP); Hudson Soft Co., Ltd., Sapporo-shi, Hokkaido (JP)
(72) Inventor: Ohno, Hirotoshi, Yokohama-shi, Kanagawa-ken (JP); Yoshikawa, Hiroyoshi, Zama-shi, Kanagawa-ken (JP); Ochi, Nobuchika, Yokohama-shi, Kanagawa-ken (JP); Hirayoshi, Takuma, Sapporo-shi, Hokkaido (JP); Yonekawa, Masaki, Sapporo-shi, Hokkaido (JP)
(74) Representative: HOFFMANN - EITLE

(57) **Abstract**

The present invention relates to an information recording medium (1) on which information signals are recorded on the signal surface of a disc plate across a plurality of sectors in units of sectors and each of the plurality of sectors has at least a sector address and sector data. In particular, this information recording medium (1) includes a first sector part (area X), which includes at least one sector, and a second sector part (area Y) which includes at least one sector having a sector address (n-4, n-3, n-2, n-1, n) equal to the at least one sector in the first sector part but containing different sector data (Y-4, Y-3, Y-2, Y-1, Y).

## Description

### BACKGROUND OF THE INVENTION

### 1. Field of the Invention

The present invention relates to an information recording medium, information recording medium authenticity checking method, information recording medium authenticity checking program, information recording medium sector reading method, and information recording medium sector reading program that can prevent illegal copies.

### 2. Description of the Related Art

Inexpensive, read-only CD-ROMs (Compact Disc-Read Only Memory), well suited to mass production, have been used in many cases as information recording media for distributing computer software. A read-only CD-ROM of this type, like a popular, read-only CD (Compact Disc) on which audio information is recorded, is fabricated as follows. When a disk-like, transparent disc plate, which is 120 mm in outside diameter, 15 mm in center hole diameter, and 1.2 mm in plate thickness, is formed from a transparent resin material using an injection molding machine, information signals to be recorded thereon are converted to a concave-convex stream of pits on the transparent disc plate. This pit stream is recorded on the disc plate as a spiral recording track to form a signal surface and, on the signal surface, a reflective film and then a protective film are formed.

When reading a conventional CD-ROM using a CD-ROM drive installed in a personal computer, a reading laser beam emitted from the optical pickup, which moves freely within the drive, is emitted onto the signal surface from the transparent disc plate side and, using laser beam light reflected back from the reflective film formed on the signal surface, data is read from the signal surface.

FIG.1 is a diagram schematically showing the sector structure when Mode 1, a typical format of a read-only CD-ROM, is applied.

FIGS.2A and 2B are diagrams showing the seotor arrangement of information signals recorded on a conventional CD-ROM. FIG.2A shows the order in which the sectors are read according to the arrangement of sectors, and FIG. 2B is a diagram showing the correspondence between the sector address of each sector and sector data.

FIG.3 is a diagram showing the configuration of a standard CD-ROM drive.

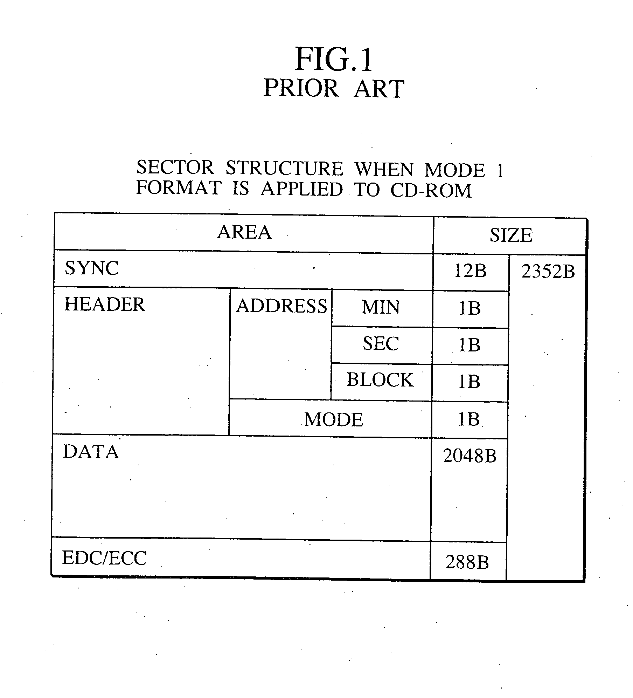

In general, information signals recorded on a read-only CD-ROM are recorded across a plurality of sectors in units of sectors on the signal surface of the disc plate. As shown in FIG.1, when a typical format, Mode 1. is applied, 2,352 bytes of data are recorded in one sector.

More specifically, one sector is composed of four areas, SYNC, HEADER. DATA. and EDC/ECC with SYNC as the first area. as shown in FIG.1.

The SYNC area (12 bytes) described above contains a special data string to indicate the start of the sector.

The HEADER area described above is composed of the ADDRESS area (3 bytes) and the MODE area (1 byte). The ADDRSS area contains a sequentially increasing sector address with the starting point of the recording area on the inner edge of the disc plate as the origin. The ADDRESS value is represented by three values (Min ... minutes: Sec ... seconds: Block ... Block number). On the other hand, the MODE area contains the CR-ROM format mode; for example, the area contains "01" when mode 1 is used, and "02" when mode 2 is used.

The DATA area (2,048 bytes) described above contains video signals or audio signals for a user or information signals (software) such as computer data signals.

The EDC (Error Detection Code)/ECC (Error Correction Code) area (288 bytes) described above contains an error detection code and an error correction code of data that is recorded and terminated in this sector.

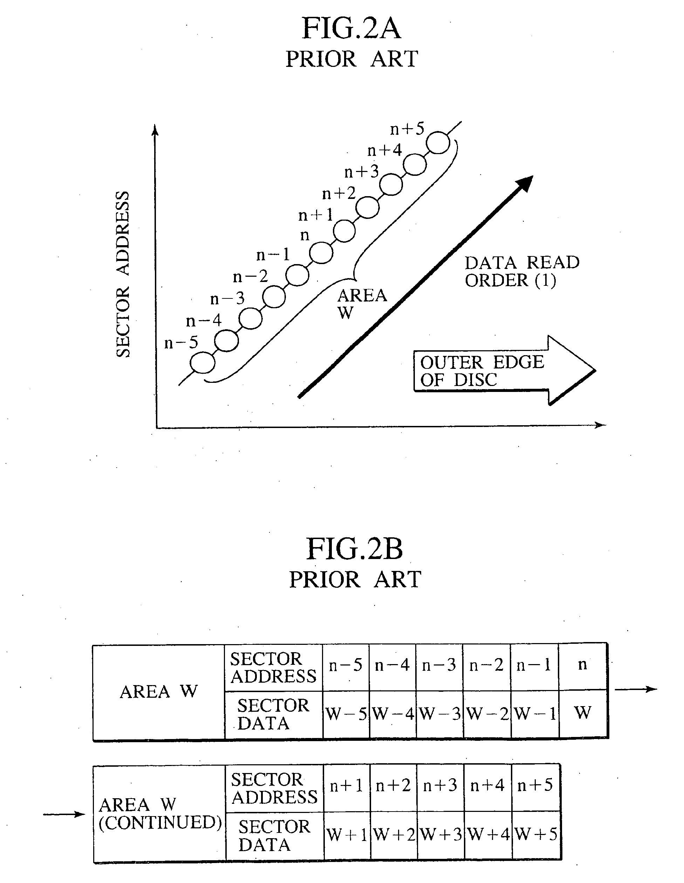

In addition, when a plurality of recording sectors with the structure described above are recorded along the spiral recording track on the disc plate of a conventional CD-ROM, the sector addresses sequentially increase from the inner edge side to the outer edge side with the innermost end of the disc plate as the origin as shown in FIG. 2A. For example, the sector addresses in area W are sequentially assigned n-5, n-4, n-3, ....., n, n+1, n+2, .....,n+5.

Based on the addresses assigned as described above, sector data is recorded in the sectors. For example, as shown in FIG.2B. sector data W-5, W-4, W-3, ....., W, W+1, W+2, ....., W+5 is recorded at sector addresses n-5, n-4, n-3, ..... n, n+1, n+2,....., n+5, respectively.

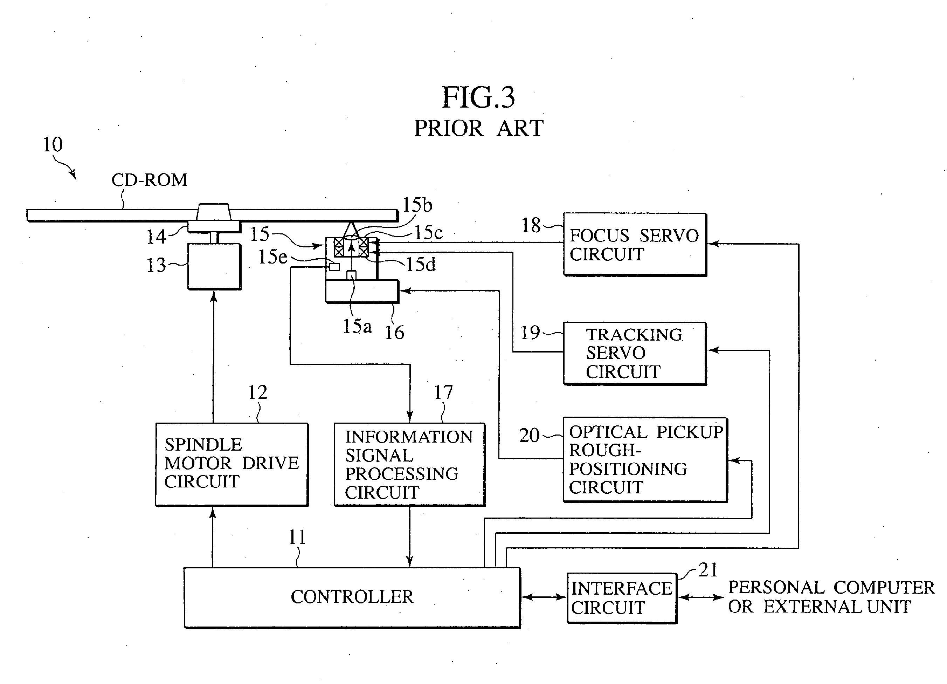

A standard CD-ROM drive installed in a personal computer will be described briefly with reference to FIG.3.

A controller 11 controls the whole standard CD-ROM drive 10 shown in FIG.3. A turn table 14 is fixed on the axis of a spindle motor 13 that is turned by a spindle motor drive circuit 12. A CD-ROM is mounted on the turn table 14 so that it can turn with the turn table 14.

An optical pickup 15, mounted on a pickup support 16, is provided below the CD-ROM in such a way that the optical pickup moves freely in the CD-ROM radial direction.

The optical pickup 15 described above includes a semiconductor laser diode 15a that emits a laser beam, an objective lens 15b that projects a laser beam, which is emitted from the semiconductor laser diode 15a and narrowed down after a collimator lens, a beam splitter (not shown) and so on, onto the signal surface of the CD-ROM, a focus coil 15c that controls the focus of the objective lens 15b, a tracking coil 15d that controls the tracking of the objective lens 15b, and a four-part photo-sensor 15e that detects a laser beam reflected back from the signal surface of the CD-ROM.

An information signal processing circuit 17 receives the reflected beam detected by the four-part photo-sensor 15e in the optical pickup 15, detects the focus error signal, tracking error signal, sector address signal, and sector data signal, and sends them to the controller 11.

When the read operation is started by a command from a personal computer, the controller 11 sends the focus control signal, which is generated by a focus servo circuit 18 based on the focus error signal, to the focus coil 15c in the optical pickup 15 and, while controlling the focus of the objective lens 15b, causes a optical pickup rough-positioning circuit 20 to roughly position the optical pickup 15 on the pickup support 16 toward a desired sector address. When the optical pickup 15 comes near the desired sector address position, the controller 11 sends the tracking control signal, which is generated by a tracking servo circuit 19 based on the tracking error signal, to the tracking coil 15d in the optical pickup 15 to control the tracking of the objective lens 15b so that it is placed in the desired sector address position. In addition, the controller 11 outputs the sector data signal to an external device such as a personal computer or a CD-ROM drive via an interface circuit 21.

To read a conventional CD-ROM in the CD-ROM drive 10 described above, a personal computer sends "READ (10)"or "Read CD" that is an MMC (Multi Media Command ) instruction. Normally, the optical pickup 15 moving freely within the CD-ROM drive 10 searches for a sector address, which is 5-10 sectors before, and the inner edge side of, a desired sector address. The optical pickup 15 then sequentially reads data until sector data at the desired sector address is detected to obtain desired data.

That is, to read from the sectors on a CD-ROM, the optical pickup 15 is usually moved to an inner edge side on the disc plate and, according to the data read sequence (1) shown in FIG.2A, the CD-ROM is read In ascending order of sector addresses, from the inner edge side of the disc to the outer edge side (in the direction indicated by the arrow), beginning at a lower sector address in the inner edge side.

Today, a write-once CD-R (Compact Disc-Recordable) is available at a lower cost. This CD-R is similar to a CD-ROM in shape and allows a user to record information signals only once in the same CD recording format as that of information signals (software) recorded on a CD-ROM.

The write-once CD-R described above is fabricated as follows. When a disc-like, transparent disc plate, which is 120 mm in outside diameter, 15 mm in center hole diameter, and 1.2 mm in plate thickness, is formed from a transparent resin material using an injection molding machine, a concave groove is formed spirally on the transparent disc plate. This concave groove is spin coated with an organic dye that will become a recording layer and, on this organic dye, a reflective film and then a protective film are formed.

Information signals can be recorded on this write-once CD-R by projecting a recording laser beam from an optical pickup. which moves freely within a recordable optical disc drive (hereinafter called a CD-R drive), onto the recording layer from the transparent disc plate side. In addition, a CD-R, on which the information signals are recorded, may be read in the CD-ROM drive 10 in the same way a CD-ROM is read.

In this case; the user is able to illegally copy recorded information to a CD-R with no permission from the copyright holder. To do so, the user first reads a CD-ROM in the CD-ROM drive, wherein the CD-ROM contains a software program to be copied using a copy program stored on a hard disk in a personal computer. Then, the user sends the information (recorded information), which is output from the CD-ROM drive 10 and which the user wants to record on a CD-R, to the CD-R drive.

In general, a copy software program stored on the hard disk in the personal computer is in one of two copy modes: one is the sector copy mode in which information signals recorded on a CD-ROM is read in order of sector addresses and the other is the file copy mode in which information signals recorded on a CD-ROM is read in file units. For example, when a copy software program in the sector copy mode is used, the information (recorded information) which is output from the CD-ROM drive 10 and which the user wants to record is output in order of sector addresses as described above. Therefore, this mode allows the user to record the information signals to a CD-R in the same way the information is recorded on the CD-ROM, resulting in more and more software programs being illegally copied from a CD-ROM to a CD-R.

When a copy software program in the file copy mode is used, illegal copies cannot be prevented completely even by the second illegal copy prevention method as will be described later. The detailed description is omitted here.

The CD-ROM recording format has the copy inhibition flag defined in the sub-code Q channel data. However, in reality, an illegal copy is made by ignoring this copy inhibition flag.

In view of this, the following three methods, first to third, are provided as the technology of preventing an illegal copy of a CD-ROM described above.

### [First method]

The first method is an illegal copy prevention method used for a so-called game disc. Utilizing the characteristics that a game machine reads only a game CD-ROM, a special security signal not recorded on a usual CD-ROM is overlaid on the recording signals on a game CD-ROM when the master disc of a game CD-ROM is fabricated. When this special security signal is detected on a game CD-ROM, a game machine judges that the disc is an authentic game CD-ROM and starts reading the game CD-ROM.

In this first method, even if information (recorded information), which is generated by reading a game CD-ROM software program by a special game machine and which the user wants to record, is sent to a standard CD-R drive in order to copy the game CD-ROM software program to a CD-R, the created disc cannot be read as a game disc. This is because, even if the game CD-ROM is illegally copied to the CD-R, the CD-R drive does not have the function of detecting and recording the special security signal and, therefore, does not record the special security signal on the CD-R.

### [Second method]

The second method is an illegal copy prevention method used for a computer software CD-ROM. This method is effective for preventing a computer software program, recorded on the computer software CD-ROM, from being illegally copied to a CD-R in units of files.

More specifically, when a file read from a computer software CD-ROM for temporary storage on a hard disk in a predetermined file mode is read from the hard disk in a personal computer, the second method prevents the file from being recorded to a CD-R. To do so, a special sector undetectable by a usual search is inserted between any two files of a plurality of user files recorded on the computer software CD-ROM. Whether or not the computer software CD-ROM is authentic is judged by the presence of this special sector.

In other words, the second method is based on the fact that the physical structure of a computer software CD-ROM described above cannot be copied. That is, a computer software CD-ROM is managed basically in two layers: physical sector management level in which the physical disc structure is defined and the logical structure level in which the structure of a file in physical sectors is defined. When data read from a computer software CD-ROM structured in the two layers as described above is recorded on the hard disk in units of files, only the logically structured data of the computer software CD-ROM is inherited (recorded) but the physical structure of the computer software CD-ROM is not recorded at all. That is, the physical sector structure necessary for recording data on a disc, such as sector addresses, sector Ids, and error correction Information, is not copied to a hard disk.

The special sector described above is not copied to a CD-R when a logical structure file once recorded on a hard disk is copied to the CD-R via a CD-R drive. The presence of this special sector is checked to judge whether or not the disc is authentic (This is disclosed, for example, in Japanese Patent Laid-Open Publication No. Hei 4-119561(1992)).

### [Third method]

The third method is that one unit (one byte) of user data (24 bytes) of an EFM frame included on a CD-ROM is logically or physically destroyed and an error signal generated when the CD-ROM is read is used for the disc security signal. This signal is used for judging if the disc is authentic (This is disclosed, for example, in Japanese Patent Laid-Open Publication No. Hei 7-235130(1995)).

Among the methods described above, a game CD-ROM used in the first method is ideal as an illegal copy preventing disc. However, this method requires that a reading device be a special game machine for detecting the copy-preventing special security signal recorded on the game CD-ROM. The method cannot be applied to the standard CD-ROM drive 10 installed in a personal computer that does not have this function.

A computer software CD-ROM created in the second method described above is effective only when data is copied in the file format to a hard disk in a personal computer and, after that, the data is recorded from the hard disk to a CD-R. This method is not effective now because data may be illegally copied in the sector copy method in which the physical sector structure of a computer software CD-ROM is copied sequentially to a CD-R from the beginning.

A CD-ROM created in the third method. has a particular portion logically or physically destroyed so that the read error signal generated from that portion may be used for judging if the disc is authentic. However, one byte of the EFM frame is made unreadable in this method in such a way that, though the error is corrected during normal read operation, the read error signal is generated in the third method. However, when one byte of the EFM frame is made unreadable, what read error signal is generated from the CD-ROM drive 10 is not disclosed.

How the third method described above prevents illegal copies will be described below with an actual CD-ROM as an example. In the error correction stages C1 and C2 of a CD (Compact Disc), which is similar to a CD-ROM in shape and on which music information is stored, up to four symbols may be corrected in the erasure method. This means that a 2.38mm of burst error, equivalent to 14 frames in length, may be corrected. In the C3 stage correction for use on a CD-ROM where the correction function is enhanced, the C2 error in which the CIRC (Cross Interleaved Reed-Solomon Code) of a CD cannot be corrected is changed to a flag. This can correct a 4.42-4.76mm of burst error equivalent to up to 26-28 frames in length.

Even if the third method described above is used to cause a one-byte error in the EFM frame on a CD-ROM with the burst-error correction function described above, that is, even if a CD-ROM is destroyed for the length of about 5µmin physical length, the error is corrected in most oases and it is difficult to obtain an error generation signal.

In the meantime, the allowable maximum values of a CD defect size, error rate, and burst error length are defined by the standard. That is, the defect size must be 100 µm or shorter, the 10-second error rate (C1) must be 3% or lower. and the burst error lengthmust be shorter than 1. 2mm equivalent to 7 frames. The third method does not disclose a specific method for generating a read error signal while satisfying the standard of the error correction function described above; it is therefore questionable whether the third method can be applied to an actual CD-ROM. When data is copied in units of sectors, a read error sector may be regarded as a special sector in the third method as in the second method.

### SUMMARY OF THE INVENTION

In view of the foregoing, there is a need for an information recording medium (CD-ROM) on which the read operation including tracking can be performed normally and that cannot be copied in the sector copy mode described above.

To solve the above problems, there is provided an information recording medium on which information signals are recorded on a signal surface of a disc plate across a plurality of sectors in units of sectors, each of the plurality of sectors having at least a sector address and sector data, wherein the plurality of sectors include a first sector part and a second sector part, the first sector part including at least one sector, the second sector part including at least one sector which has a sector address equal to the at least one sector in the first sector part but contains different sector data.

In a preferred embodiment of the present invention, a plurality of the second sector parts are provided near the first sector part.

in a preferred embodiment of the present invention, a plurality of pairs of the first sector part and the second sector part are provided, the plurality of pairs having sector addresses different from each other depending upon positions thereof on the disc plate.

In a preferred embodiment of the present invention, when each of the first sector part and the second sector part has a plurality of sectors and when there are a plurality of duplicate-sector-address parts including the first sector part and at least one second sector part, consecutive seotor addresses equal to those in the Nth (N is a natural number) duplicate-sector-address part are assigned to the (N+1)th duplicate-sector-address part or a sector address equal to the last sector address, which is largest, of addresses in the Nth duplicate-sector-address part is assigned consecutively at least twice.

In a preferred embodiment of the present invention, when each of the first sector part and the second sector part has a plurality of sectors and when there are a plurality of duplicate-sector-address parts including the first sector part and at least one second sector part, consecutive sector addresses equal to those in the Nth (N is a natural number) duplicate-sector-address part are assigned to the (N+1)th duplicate-sector-address part or a sector address equal to the last sector address, which is largest, of addresses in the Nth duplicate-sector-address part is assigned consecutively at least twice and, at the same time, error uncorrectable data is included in the sector data corresponding to the (N+1)th duplicate-sector-address part.

To solve the above problems, there is provided an information recording medium authenticity checking method for checking authenticity of the information recording medium described above, wherein, when there are a plurality of duplicate-sector-address parts including the first sector part and at least one second sector part, the authenticity is judged by checking if two units of data differ, the two units of data constituting a pair of sector data corresponding to at least one of equal sector address pairs of the duplicate-sector-address parts.

To solve the above problems, there is provided an information recording medium authenticity checking program for checking authenticity of the information recording medium described above, wherein, when there are a plurality of duplicate-sector-address parts including the first sector part and at least one second sector part, an authenticity checking, step is executed to see if two units of data differ, the two units of data constituting a pair of sector data corresponding to at least one of equal sector address pairs of the duplicate-sector-address parts.

To solve the above problems, there is provided an information recording medium sector reading method for reading the plurality of sectors recorded on the information recording medium described above, wherein there are a plurality of duplicate-sector-address parts including the first sector part and at least one second sector part, the method comprising the steps of sequentially reading the sector data in ascending order of the sector addresses of the N-th (N is a natural number) duplicate-sector-address part; skipping over the (N+1)th duplicate- sector-address part; making a search from a position. where the sector address is larger than that of the duplicate- sector-address part that was skipped over, to a start of the (N+1)th duplicate-sector-address part; and sequentially reading the sector data in ascending order of the sector addresses from the start of the (N+1)th duplicate-sector-address part.

To solve the above problems, there is provided an information recording medium sector reading program for reading the plurality of sectors recorded on the information recording medium described above, wherein there are a plurality of duplicate-sector-address parts including the first sector part and at least one second sector part, the program comprising the steps of: sequentially reading the sector data in ascending order of the sector addresses of the N-th (N is natural number) duplicate-sector-address part; skipping over the (N+1)th duplicate-sector-address part; making a search from a position, where the sector address is larger than that of the duplicate-sector-address part that was skipped over, to a start of the (N+1)th duplicate-sector-address part; and sequentially reading the sector data in ascending order of the sector addresses from the start of the (N+1)th duplicate-sector-address part.

The nature, principle and utility of the invention will become more apparent from the following detailed description when read in conjunction with the accompanying drawings.

### BRIEF DESCRIPTION OF THE DRAWINGS

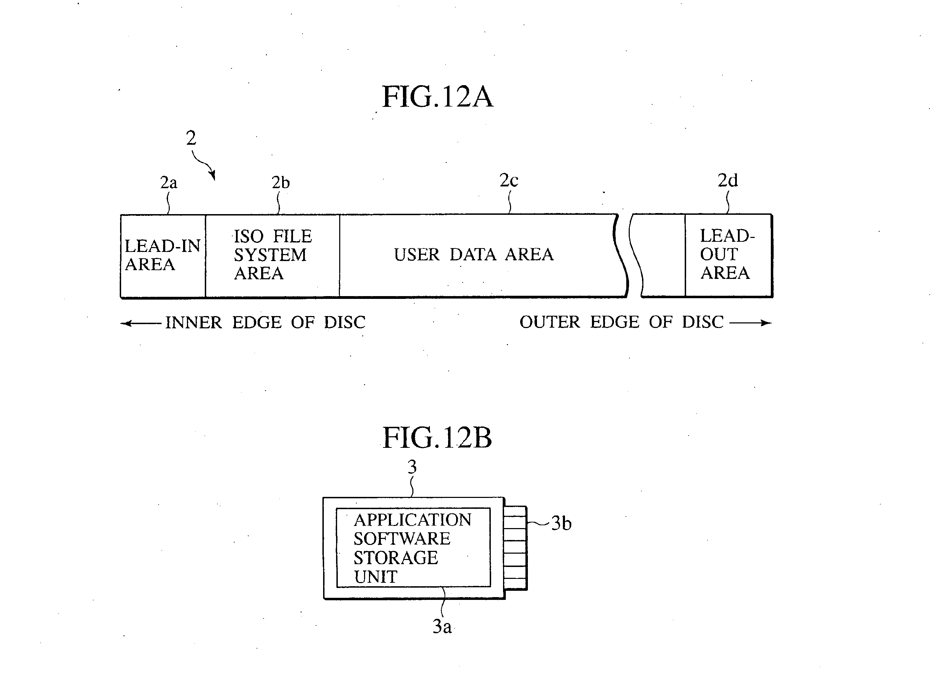

In the accompanying drawings:
FIG.1 is a diagram schematically showing the sector structure of a read-only CD-ROM when a typical format. Mode 1, is applied;
FIGS.2A and 2B are diagrams showing the sector arrangement of information signals recorded on a conventional CD-ROM, wherein FIG.2A shows the order in which sectors are read according to the sector arrangement and FIG. 2B is a diagram showing the correspondence between sector addresses and sector data of the sectors;
FIG. 3 is aconfiguration diagram showing atypical CD-ROM drive;

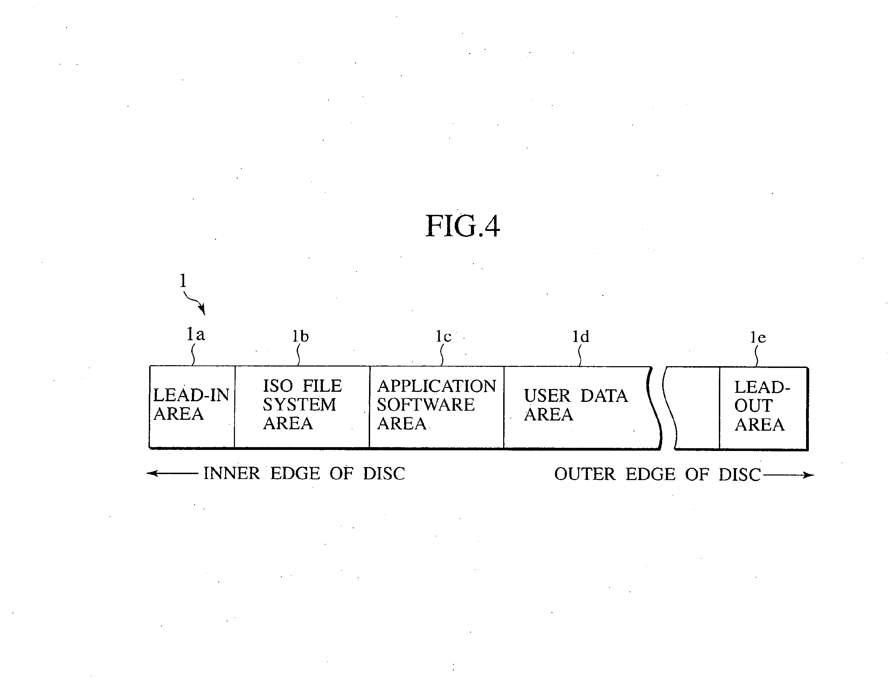

FIG.4 is a diagram showing the entire configuration of an information recording medium (CD-ROM) in a first embodiment of the present invention;

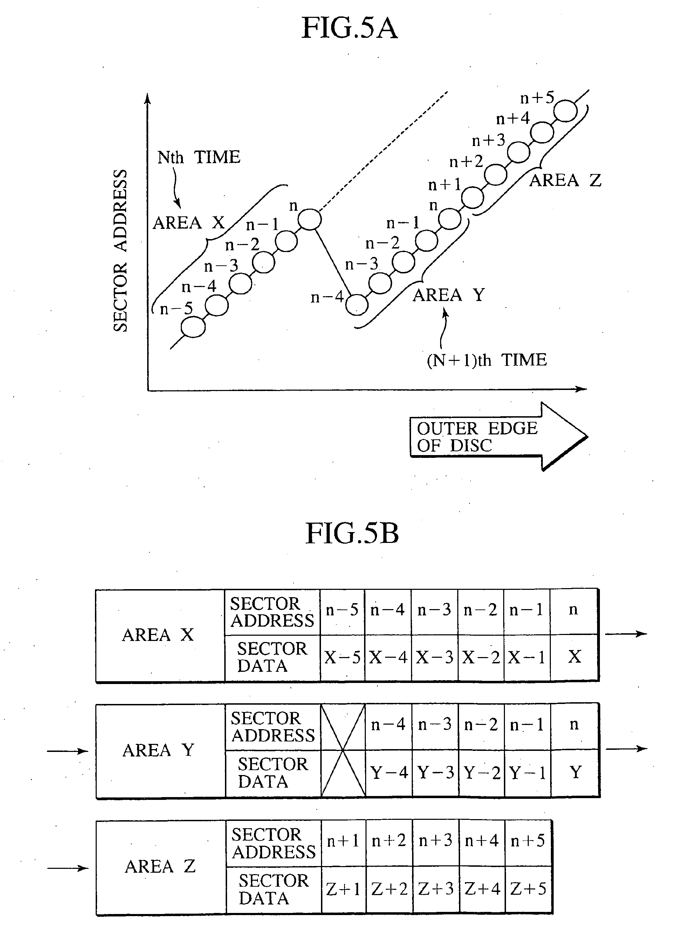

FIG5.5A and 5B are diagrams showing the sector arrangement of information signals recorded on the information recording medium (CD-ROM) in the first embodiment of the present invention, wherein FIG. 5A shows the sector arrangement order and FIG.5B is a diagram showing the correspondence between sector addresses and sector data of the sectors;

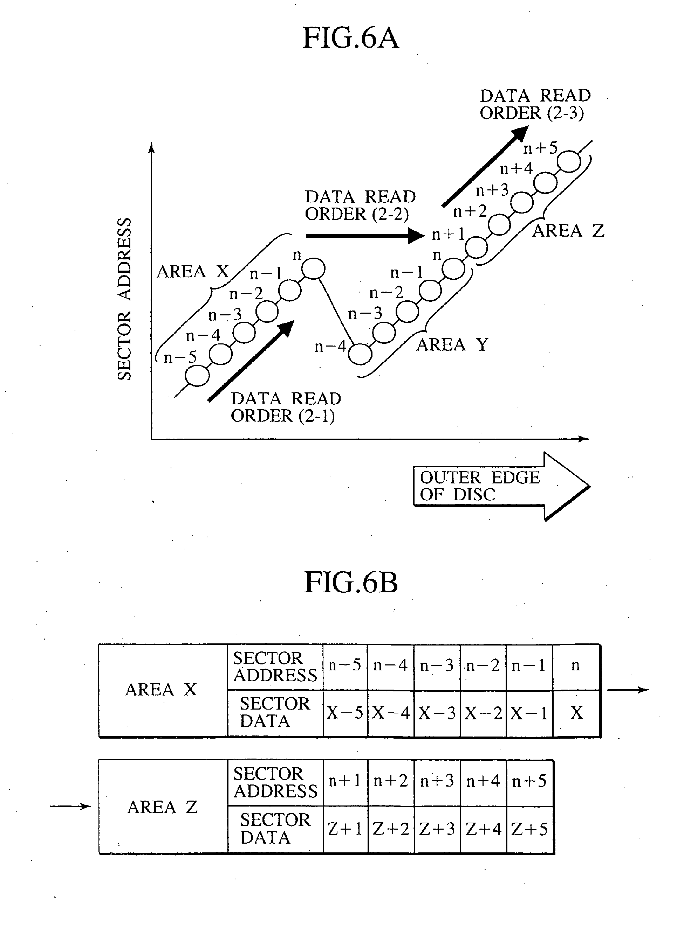

FIGS.6A and 6B are diagrams showing the operation executed when the information recording medium (CD-ROM) in the first embodiment of the present invention is illegally copied, wherein FIG.6A shows the sector read operation and FIG. 6B is a diagram showing the correspondence between sector addresses and sector data of the sectors at sector read time;

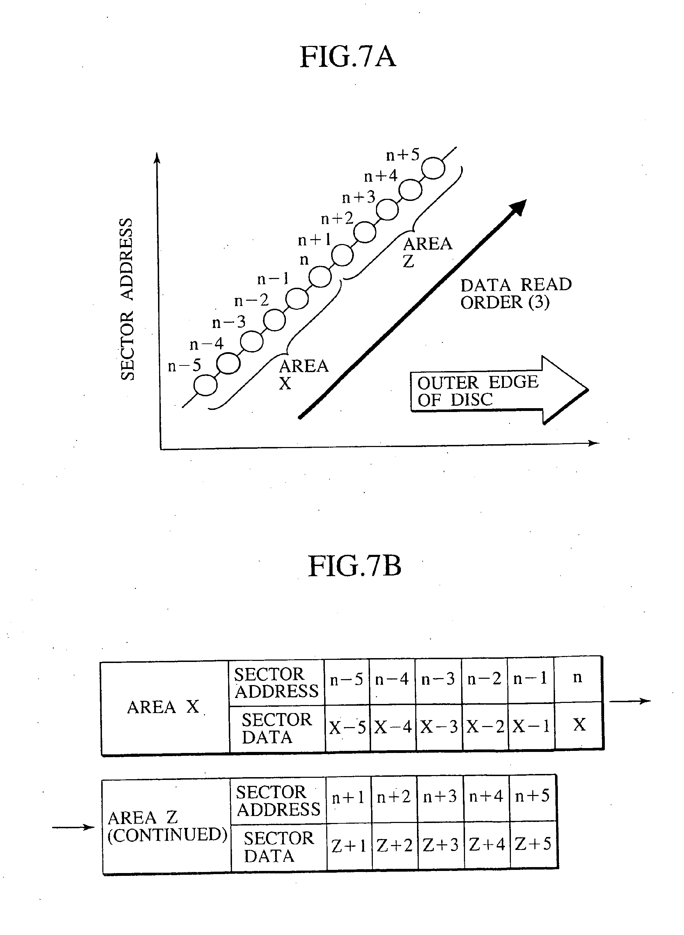

FIGS.7A and 7B are diagrams showing the sector arrangement on a CD-R after the information recording medium (CD-ROM) in the first embodiment of the present invention is illegally copied, wherein FIG. 7A shows the sector arrangement order and FIG.7B is a diagram showing the correspondence between sector addresses and sector data of the sectors;

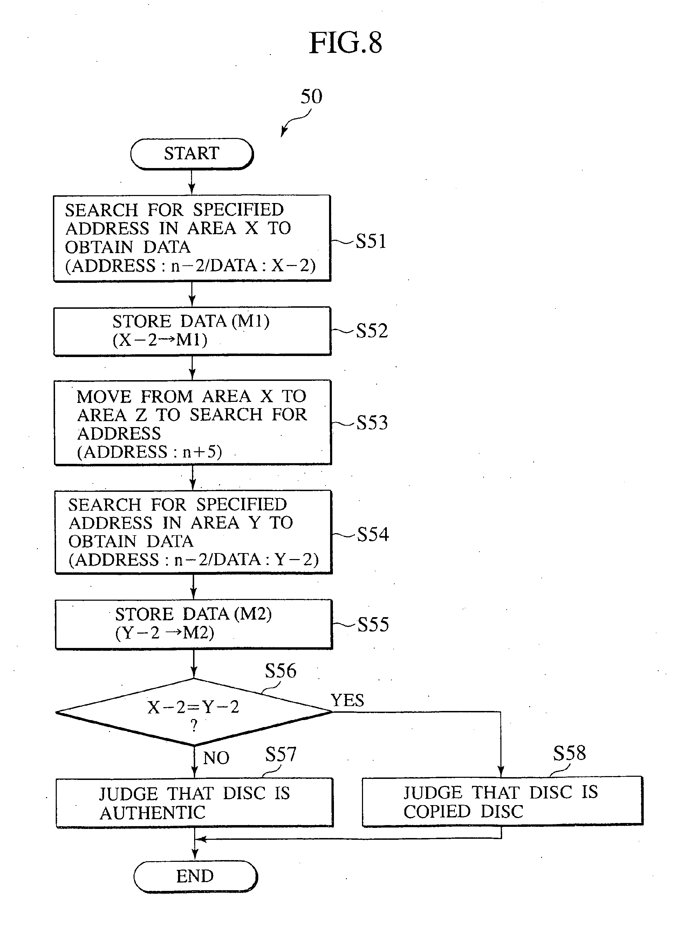

FIG. 8 is a flowchart showing the operation of an authenticity checking program for the information recording medium (CD-ROM) in the first embodiment of the present invention;

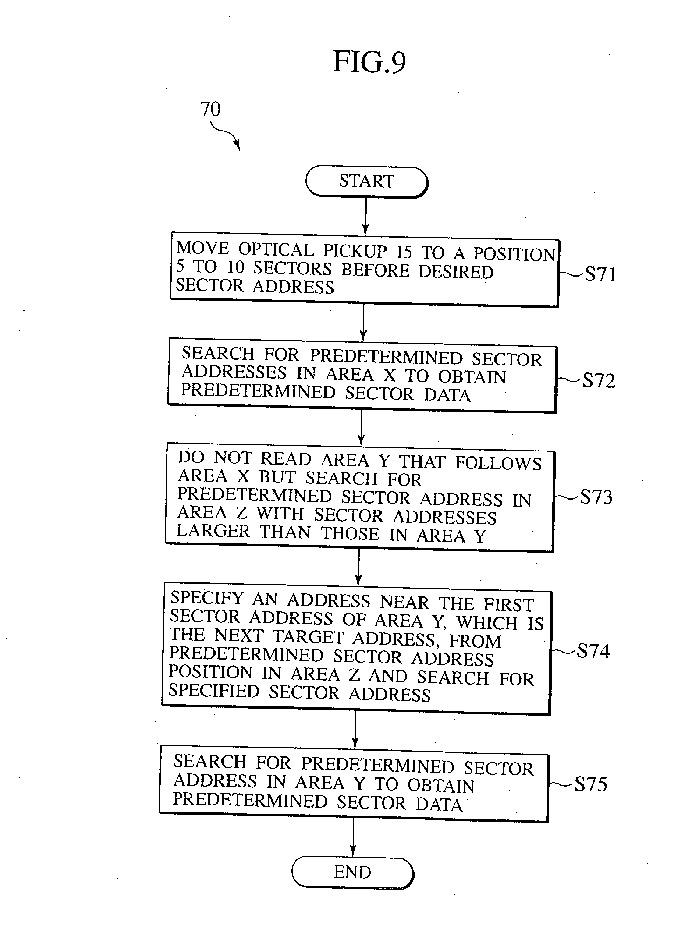

FIG.9 is a flowchart showing the operation of a sector reading program for the information recording medium (CD-ROM) in the first embodiment of the present invention;

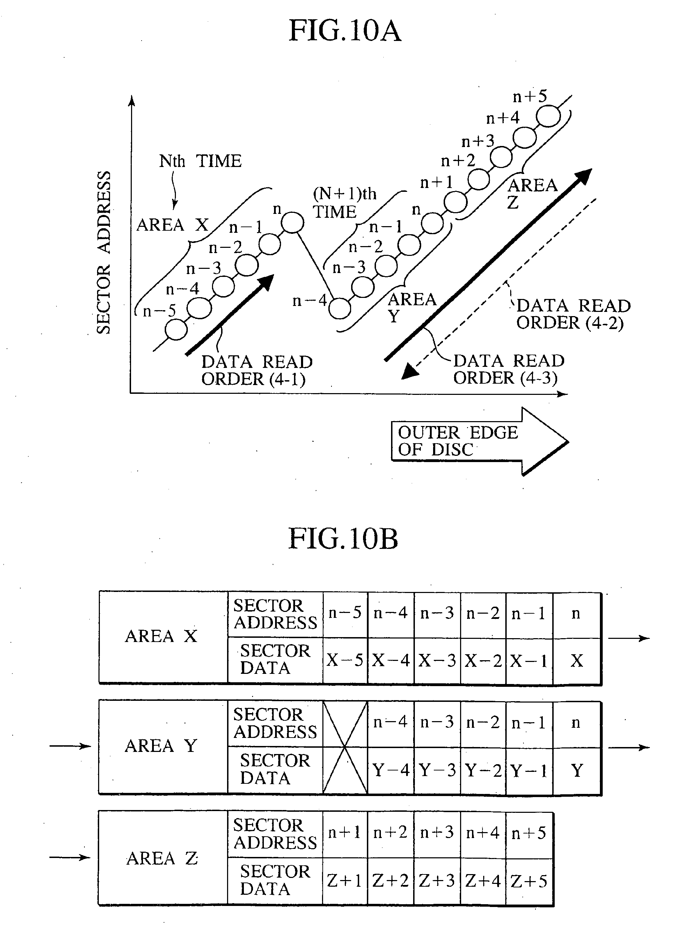

FIGS.10A and 10B are diagrams showing the operation executed when the information recording medium (CD-ROM) in the first embodiment of the present invention is read normally, wherein FIG.10A shows the sector read operation and FIG. 10B is a diagram showing the correspondence between sector addresses and sector data of the sectors at sector read time;

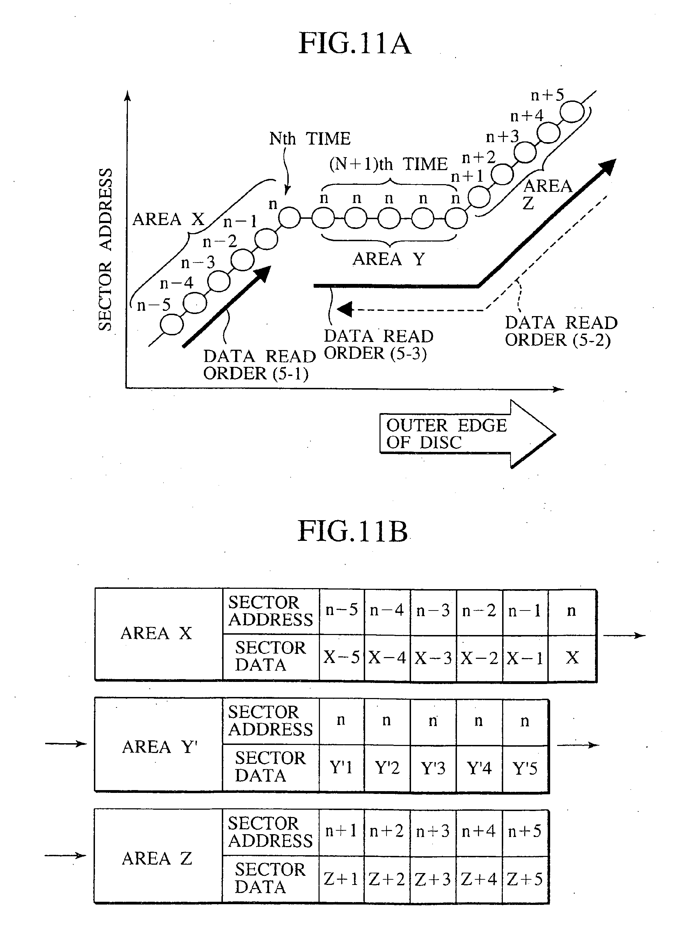

FIGS.11A and 11B are diagrams showing the sector arrangement on a CD-ROM created by partly modifying the first embodiment, wherein FIG.11A shows the sector read operation and FIG. 11B is a diagram showing the correspondence between sector addresses and sector data of the sectors at sector read time;
FIGS . 12A and 12B are diagrams showing a second embodiment of the present invention, wherein FIG.12A shows the configuration of an entire information recording medium (CD-ROM) in the second embodiment of the present invention and FIG.12B is a diagram showing a removable memory that is optionally connectable; and

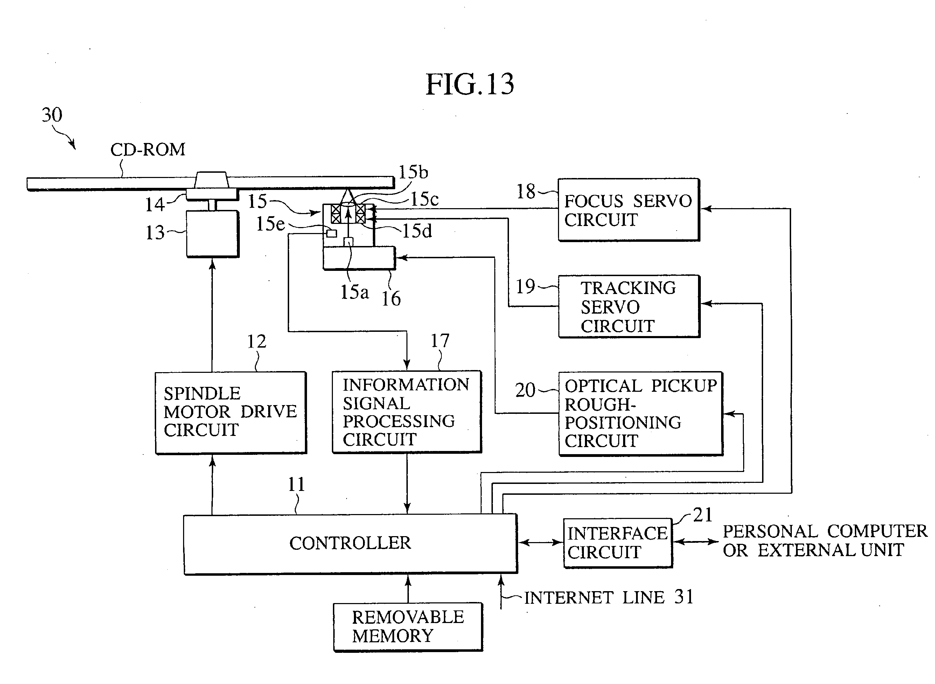

FIG. 13 is a configuration diagram showing the state in which the removable memory shown in FIG.12B is connected to the controller in a CD-ROM drive.

### DESCRIPTION OF THE PREFERRED EMBODIMENTS

Embodiments of an information recording medium, information recording medium authenticity checking method, information recording medium authenticity checking program, information recording medium sector reading method, and information recording medium sector reading program according to the present invention will be described below with reference to FIGS.4-13. A first embodiment, a second embodiment, and an application of the first embodiment and the second embodiment will be described in that order.

An information recording medium according to the present invention is applied to a read-only CD-ROM (Compact Disc-Read Only Memory) and especially to a method employed by a CD-ROM in which information signals (software) are recorded across a plurality of sectors in units of sectors on the signal surface of a disc plate. An information recording medium according to the present invention is configured in such a way that some of a plurality of sectors are assigned duplicate addresses to prevent information signals (software) recorded on a CD-ROM from being illegally copied to a CD-R (Compact Disc-Recordable) on which information may be written only once and to a CD-RW (Compact Disc-Rewritable) on which information may be written multiple times.

An information recording medium authenticity checking method and an information recording medium authenticity checking program according to the present invention check whether, for a pair of duplicate addresses included in a part where some sectors have duplicate addresses, the two data units constituting a pair of sector data differ. By doing so, the method and program judge whether the information recording medium (CD-ROM) is the one according to the present invention or is created by copying the information recording medium (CD-ROM) according to the present invention.

An information recording medium sector reading method and an information recording medium sector reading program according to the present invention do not sequentially read a part, where some of sectors have duplicate addresses, when reading a plurality of sectors from an information recording medium (CD-ROM) according to the present invention described above but provide new reading steps for correctly reading duplicate sector addresses (duplicate sector addresses).

### <First embodiment>

FIG. 4 is a diagram showing the configuration of an entire information recording medium (CD-ROM) in a first embodiment of the present invention. FIGS. 5A and 5B are diagrams showing the sector arrangement of information signals recorded on the information recording medium (CD-ROM) in the first embodiment of the present invention. FIG. 5A shows the sector arrangement order, and FIG.5B is a diagram showing the correspondence between sector addresses and sector data of the sectors.

As shown in FIG.4. the information recording medium (hereinafter called CD-ROM) 1 in the first embodiment of the present invention is composed of a lead-in area 1a, an ISO file system area 1b, an application software area 1c a user data area 1d, and a lead-out area 1e formed along a spiral recording track created from the inner edge side to the outer edge side of a disc-shaped disc plate.

The lead-in area 1a described above contains the table of contents, the contents, and the storage time of software programs recorded in the user data area 1d. The ISO file system area 1b contains a file structure conforming to those defined by the ISO (International Organization for Standardization). The application software area 1c contains at least an authenticity checking program and a sector reading program which are a major part of the present invention. They will be described later. The user data area 1d is composed of a plurality of sectors, each composed of at least the sector address and sector data, to store information signals (software) such as user video signals, audio signals, and computer data signals. Although the structure of each sector in this area is the same as that shown above in FIG.1, the sector address and the sector data of each sector slightly differ from those on a conventional CD-ROM. This will be described later. The lead-out area 1e contains the signal indicating the end of recorded software.

The information signals (software) recorded in the user data area 1d on the CD-ROM 1 in the first embodiment are recorded across a plurality of sectors in units of sectors as described above. This CD-ROM is characterized in that some of the plurality of sectors have duplicate addresses as shown in FIG.5A and that the two sector data units corresponding to each pair of duplicate sector addresses differ as shown in FIG.5B.

More specifically, on a spiral recording track running from the inner edge side to the outer edge side, sector addresses n-5, n-4, n-3, n-2, n-1, and n are assigned to a plurality of sectors in area X as shown in FIG.5A. Similarly, in area Y that follows area X, sector addresses n-4, n-3, n-2, n-1, and n, part of which are duplicates of some of the sector addresses assigned to area X, are assigned. In addition, in area Z that follows area Y, sector addresses n+1, n+2, n+3, n+4, and n+5 are assigned. In this example, there are two duplicate-sector-address parts. in which the duplicate sector addresses are assigned, in area X and area Y on the inner edge side of the disc. This embodiment is not limited to two duplicate-sector-address parts. Producing an illegal copy becomes more difficult when two or more duplicate-sector- address parts, in which the duplicate sector addresses are assigned, are allocated closely.

The duplicate-sector-address parts in which the duplicate sector addresses are assigned, though allocated only on the inner edge side of the disc in the example described above, may be assigned to any parts. Areas similar to area X and area Y allocated on the inner edge side may be allocated also in an intermediate position of the disc (for example, area X1 and area Y1) and/or on the outer edge side (for example, area X2 and area Y2). That is, area X and area Y have duplicate sector addresses, area X1 and area Y1 have duplicate sector addresses, and area X2 and area Y2 have duplicate sector addresses. However, because those areas are allocated in different positions on the disc, the sector addresses of area X, area X1, and area X2 are different.. This configuration makes it more difficult to illegally copy information.

Now let the area from sector addresses n-4 to n assigned to area X be the Nth (N is a natural number) duplicate-sector-address part, and the area from sector address n-4 to n assigned to area Y be the (N+1)th duplicate-sector-address part. Then, the above description means that, when area X and area Y are allocated on the inner edge side of the disc, the (N = first) duplicate-sector- address part appears in area X and the (N = second) duplicate-sector-address part appears In area Y.

In this case, the sequential sector addresses equal to those assigned to the Nth duplicate-sector-address part are assigned to the (N+1)th duplicate-sector-address part that follows the Nth duplicate-sector-addrese part and, in addition, the Nth duplicate-sector-address part and the (N+1)th duplicate-sector-address part are allocated closely on a recording track. This makes it easier to read the duplicate-sector-address parts at a sector read time that will be described later.

Sector data is recorded in the sectors allocated as described above. For example, as shown in FIG. 5B, sector data X-5, X-4, X-3, ....., and X are recorded at sector addresses n-5, n-4, n-3, ..., and n in area X, sector data Y-4, Y-3, ..., and Y are recorded at sector addresses n-4, n-3, .... and n in area Y, and sector data Z+1, Z+2,..., and Z+5 are recorded at sector addresses n+1, n+2. ..., and n+5 in area Z. In this case, it is essential that the contents of seotor data corresponding to duplicate sector addresses be different to prevent an illegal copy.

Next, the operation executed when a user who intentionally copies information signals (software) illegally from the CD-ROM 1 described above to a CD-R will be described with reference to FIG.3 referenced in the description of related art, FIG.4 used in the description of this embodiment, and FIGS.6A and 6B and FIGS. 7A and 7B.

FIGS.6A and 6B are diagrams used to describe the operation executed when the information recording medium (CD-ROM) in the first embodiment of the present invention is illegally copied. FIG.6A shows the sector read operation, and FIG.6B is a diagram showing the correspondence between the sector addresses of the sectors and the sector data of the sectors when they are read.

FIGS.7A and 7B are diagrams showing the arrangement of sectors on a CD-R after the information recording medium (CD-ROM) in the first embodiment of the present invention is illegally copied. FIG. 7A shows the sector arrangement order, and FIG.7B is a diagram showing the correspondence between sector addresses and sector data in the sectors.

To copy the CD-ROM 1 described above to a CD-R, the user first reads the CD-ROM 1 in the CD-ROM drive 10 using a copy program stored on a hard disk in a personal computer as described in the description of related art. Then, the user sends the information (recorded Information), which is obtained by the read operation and which the user wants to record on a CD-R, to the CD-R drive. In this way, the user illegally copies recorded information to a CD-R with no permission from the copyright holder of the recorded information.

As described in the description of related art, when a copy software program using the sector copy method is used, the information (recorded information) which is output from the CD-ROM drive 10 and which the user wants to record on the CD-R are output from the inner edge side to the outer edge side as described above in the following order; the lead-in area 1a, ISO file system area 1b, application software area 1c, user data area 1d, and lead-out area 1e shown in FIG.4. Note that, when a plurality of sectors is read from the user data area 1d, the copy software program that uses the sector copy mode reads data in the sector addresses order.

More specifically, as shown in FIG.6A and FIG.6B, when the CD-ROM drive 10 reads sector data from the CD-ROM 1, the optical pickup 15 is first placed in a position, which is 5-10 sectors before the desired sector address on the disc inner edge side, as described in the description of related art. When the desired sector address, for example, n-5, is detected in area X, the CD-ROM drive searches area X for sector addresses n-5, n-4, n-3, n-2, n-1. and n according to the data read order (2-1) and sequentially reads sector data X-5, X-4, X-3, X-2, X-1, and X that correspond to the sector addresses.

Next, because the sector addresses n-4, n-3, n-2, n-1, and n in area Y that follows area X are duplicates of a part of the addresses in area X and because area Y contains only sector addresses smaller than n+1 that is the address immediately following n, the CD-ROM drive 10 searches area Z, which is the next area in the data read order (2-2), for addresses. Therefore, the sector data corresponding to the sector addresses in the area Y is not output at all.

Next, area Z begins with the sector address n+1. The CD-ROM drive 10 restarts the normal read operation as in area X to read area Z according to the data read order (2-3).

Therefore, when sector data at sector addresses, n-5 to n+5, is read continuously and then copied illegally to a CD-R, area Y does not exist between area X and area Z in the sector address arrangement as shown in FIG.7A, meaning that sector data in area Y is lost. When the CD-R created through the illegal copy operation is read in the CD-ROM drive 10, data is read according to the data read order (3). Therefore, the data that is read from the sectors, which does not include the sector data corresponding to area Y as shown in FIG.7B, cannot be used. Because an illegal copy becomes meaningless, the CD-ROM 1 in the first embodiment completely prevents an illegal copy from being created on a CD-R and thus prevents the infringement of copyright.

Next, the operation in which the CD-ROM 1 in the first embodiment is read normally in a standard CD-ROM drive 10 will be described with reference to FIGS.3, 4, 5A and 5B described above as well as FIGS.8-9, 10A and 10B.

FIG.8 is a flowchart showing the operation of an authenticity checking program when the information recording medium (CD-ROM) in the first embodiment of the present invention is used. FIG.9 is a flowchart showing the operation of a sector read program when the information recording medium (CD-ROM) in the first embodiment of the present invention is used. FIGS.10A and 10B are diagrams showing the operation in which the information recording medium (CD-ROM) in the first embodiment of the present invention is normally read. FIG. 10A shows the sector read operation, and FIG. 10B is a diagram showing the correspondence between sector addresses and sector data when data is read from sectors.

When the read operation is started by a command from a personal computer with the CD-ROM 1 in the first embodiment inserted into a standard CD-ROM drive 10. the optical pickup 15 reads the lead-in area 1a, ISO file system area 1b application software area 1c and user data area 1d sequentially beginning with the inner edge side of the CD-ROM 1.

In this case, the application software area 1c contains at least an information recording medium authenticity checking program 50 shown in FIG. 8 and an information recording medium sector reading program 70 shown in FIG.9.

In the description below, the information recording medium authenticity checking program 50 shown in FIG. 8 includes the duplicate sector address search operation of the information recording medium sector reading program 70 shown in FIG.9 to check the authenticity of a disc. However, this embodiment is not limited to this program design. Any program may be used if the program can determine that at least two sector data units differ which constitute a pair of sector data corresponding to a pair of duplicate sector addresses in duplicate-sector-address parts on the CD-ROM 1. In this embodiment, the steps shown in FIG.8 will be described.

When duplicate-sector-address parts are allocated apart in a plurality of locations on the CD-ROM 1, for example, inner disc edge side, intermediate position on the disc, and outer disc edge side, the authenticity checking program 50 is first executed to check two duplicate-sector-address parts. Nth (N is a natural number that is 2 or larger) and (N+1)th, to check the authenticity of the disc and then the sector reading program 70 is used to read the sectors.

It is also possible to start the sector reading program 70 first to read a plurality of sectors and, after that, execute the authenticity checking program 50 to check the authenticity of a disc at a predetermined duplicate-sector-address part to judge that the disc is authentic and, then, to start the sector reading program 70 again to read a plurality of sectors beginning at the position immediately following the position from which data was read last before.

In addition, it is also possible to read only the sector reading program 70 without reading the authenticity checking program 50 in the following two cases: one case is when, after the authenticity checking program 50 judges that the CD-ROM 1 is authentic, the CD-ROM 1 is read again without removing it from the CD-ROM drive 10 and the other case is when the number of an authentic disc is once stored in the CD-ROM drive 10. the disc is removed and, after that, the disc is re-inserted into the CD-ROM drive 10.

In the cases described above, because the authenticity checking program 50 and the sector reading program 70 described above know in advance that some of a plurality of sectors on the CD-ROM 1 have duplicate addresses, the programs are created based on information on duplicate sector addresses. When the optical pickup 15 reads the authenticity checking program 50 and/or sector reading program 70 from the application software area 1c, the programs 50 and 70 are sent to the controller 11 via the information signal processing circuit 17. Therefore, the controller 11 causes the optical pickup rough-positioning circuit 20 to move the optical pickup 15 to a position near the desired sector address and then causes the tracking servo circuit 19 to perform the address search using the objective lens 15b in the optical pickup 15.

In this case, even if the application software area 1c of the CD-ROM 1 is illegally copied to a CD-R when the CD-ROM 1 is copied to the CD-R using the copy software program stored on the hard disk in the personal computer, the sectors in the user data area 1d are copied only in the sector address order. Therefore, even if an illegally copied authenticity checking program or a sector reading program in the application software area 1c is executed, it is apparent from the above description that duplicate sector addresses and the corresponding sector data cannot be read.

First, when the information recording medium authenticity checking program 50 shown in FIG.8 checks the authenticity of the CD-ROM 1, the program checks whether a match occurs between two data units constituting a pair of sector data corresponding to a predetermined pair of duplicate sector addresses, for example, n-2 and n-2, wherein n-2 is one of duplicate sector addresses in area X and area Y where some sector addresses are duplicate addresses. Whether or not the disc is authentic may be judged by checking if the two sector data units constituting each pair of sector data in duplicate-sector-address parts differ.

That is, when the authenticity checking program 50 is started in the flowchart shown in FIG.8 with the sector arrangement and the data shown in FIGS.5A and 5B, the optical pickup 15 searches for a pre-specified sector address n-2 in area X in step S51 to obtain sector data X-2 corresponding to the address.

Next, in step S52, the sector data X-2 obtained in step S51 is stored in a first memory M1 provided in the controller 11 (FIG.3).

Next, in step S53, the optical pickup 15 moves from area X to area Z to search for the sector address n+5 without reading area Y.

Next, in step S54, the optical pickup 15 moves from the sector address n+5 in area Z to area Y on the inner edge side because, among the duplicate sector addresses, the sector address n-2 in area Y is predetermined as the corresponding sector address n-2 in area X. The optical pickup 15 searches for the sector address n-2 in area Y to obtain the corresponding sector data Y-2.

In this case, an area, X, Y, or Z, is not specified but only a duplicate address value is specified in the authenticity checking program 50. Because area Y does not exist on the copied disc (CD-R), the optical pickup 15 searches for the sector address n-2 pro-specified in area X again.

The operation in steps S53-S54 described above uses the sector reading program 70. The operation of the sector reading program 70 will be described later with reference to PIGS.9, 10A and 10B.

Next, in step S55, the sector data Y-2 obtained in step S54 is stored in a second memory M2 provided in the controller 11 (FIG.3).

Next, in step S56, the comparator (not shown) provided in the controller 11 (FIG. 3) compares the sector data X-2 stored in the first memory M1 with the sector data Y-2 stored in the second memory M2. If the sector data X-2 and the sector data Y-2 differ (NO), control is passed to step S57; on the other hand, if the sector data X-2 and the seotor data Y-2 are the same (YES), control is passed to step 558.

Because the sector data X- 2 and the sector data Y-2 differ in step S57, the judgment unit (not shown) provided in the controller 11 (FIG.3) judges that the disc (CD-ROM 1) is authentic and terminates the operation of the authenticity checking program 50. That is, the judgment unit judges that area Y exists and that the disc is authentic and, if necessary, starts the sector reading program.

On the other hand, because the sector data X-2 and the sector data Y-2 are the same in step S58. the judgment unit (not shown) provided in the controller 11 (FIG.3) judges that the disc (CD-R) is a copied disc and terminates the operation of the authenticity checking program 50. That is, the judgment unit judges that the disc is a copied disc because area Y does not exist. After that, the judgment unit may restart the CD-ROM application software program if necessary and issue a warning message such as "This disc is a copied disc and cannot be read".

Next, when a part where some addresses of a plurality of sectors are duplicate is read while the optical pickup 15 reads sector data from the plurality of sectors on the CD-ROM in the correct sequence, the information recording medium sector reading program 70 shown in FIG.9 reads sector data as shown in FIG. 10. That is, after reading area X with smaller sector addresses, the optical pickup 15 does not read area Y but searches for a predetermined sector address in area Z with sector addresses larger than those in area Y. From that position, the optical pickup 15 moves into the inner edge side direction to area Y where some of sector addresses are duplicate and then reads area Y and area Z in this order.

That is, when the operation of the sector reading program 70 is started in FIGS. 9 and 10, the optical pickup 15 is moved to a sector that is 5 to 10 sectors before the desired sector address in step S71.

Next, in step S72, the optical pickup 15 searches for predetermined sector addresses and obtains predetermined sector data in area X. In this case, the sector address range is pre-set in area X. For example, the optical pickup 15 sequentially searches for addresses and obtains sector data in a range from the sector address n-5 to the sector address n according to the data read order (4-1).

Next, in step S73, the optical pickup 15 does not read area Y that follows area X but searches for a predetermined sector address, for example, the sector address n+5. in area Z with sector addresses larger than those in area Y.

Next, in step S74, an address near the first sector address of area Y, which is the next target address, is specified from the predetermined sector address position (for example, the position at the sector address n+5) in area Z. The optical pickup 15 searches for the sector address specified here, for example, sector address n-4, according to the data read order (4-2).

Next, in step S75, the optical pickup 15 searches for the predetermined sector addresses and obtains predetermined sector data in area Y. The optical pickup 15 sequentially searches for addresses and obtains sector data according to the data read order (4-3) from the sector address n-4 in area Y specified in step S74 to the sector address n. After that, the optical pickup 15 sequentially searches for addresses and obtains sector data in area Z that follows area Y.

As described above, sector data is read according to the procedure of the sector reading program 70 that reads data in the order (4-1), (4-2), and (4-3). In the Nth (N is a natural number) duplicate-sector-address part that is one of duplicate-sector-address parts, the optical pickup 15 sequentially reads sector data in ascending order of sector addresses. Then, the optical pickup 15 does not read (N+1)th duplicate-sector-address part, moves from a position, whose sector address is larger than those in the (N+1)th duplicate-sector-address part, to the start of the (N+1)th duplicate-sector-address part and, after that, sequentially reads sector data from the start of the (N+1)th duplicate-sector-address part in ascending order of sector addresses. In this way, the sector data in a duplicate-sector-address part that cannot be read in a usual method can be read correctly.

In this case., if at least two consecutive sector addresses are included in the (N+1)th duplicate-sector-address part that is one of duplicate-sector-address parts, the address search into the direction of the start of the (N+1)th duplicate-sector-address part becomes easy as described above. However, because the read operation at sector addresses near the start, for example, at n-4 and n-3, of area Y, which is the (N+1)th duplicate-sector-address part, is unstable on some CD-ROM drives 10. the search area may be set up at an appropriate position as necessary.

In addition, although standard CD-ROM drives 10 check that the sector address number is increased as the sectors of the CD-ROM1 are read and, when the same sector address is detected, usually ignore the same sector address, some CD-ROM drives 10 do not check sector address values but output a specified number of sectors beginning at the start sector address. In such a CD-ROM drive 10, the duplicate-sector-address part in area Y on the CD-ROM 1 in the first embodiment may be detected and read. To solve this problem, uncorrectable error data is included in the sector data corresponding to the duplicate sector address part in area Y. For example, the sector at the start address n-4 of area Y is made unreadable in order to reset the cache memory (not shown) in the CD-ROM drive 10 at sector read time and to prevent the duplicate-sector-address part in area Y from being read.

More specifically, changing the sector at the address n-4, which is the start address of area Y, to an unreadable sector is equivalent, for example, to the state in which the sector data is made unreadable because of an uncorrectable physical or logical error. In other words, the sector data Y-4 corresponding to the sector address n-4 in area Y is made error uncorrectable data.

Next, with reference to FIG.11A and FIG.11B, a CD-ROM whose sector arrangement is created in part by modifying the first embodiment will be described briefly.

FIG.11A is a diagram showing the sector arrangement on a CD-ROM created in part by modifying the first embodiment.

In the modification of the first embodiment shown in FIG.11A, the sector arrangement of area Y on the CD-ROM 1 in the first embodiment described in FIG. 5A is partially modified to create area Y'. Area X, area Y', and area Z are provided sequentially from the inner disc edge side to the outer disc edge side.

Comparing this figure with FIG. 5A indicates that, among area X, area Y', and area Z, only area Y' is modified. In area Y', the address n, which is the last and largest sector address in area X, is assigned five times, n, n, n, n, n, repeatedly. Sector data Y'1, Y'2, Y'3, Y'4, and Y'5 corresponding to duplicate sector addresses n, n, n, n, n each have different contents.

In this case, error uncorrectable data, if included in the sector data corresponding to the duplicate-sector-address part in area Y' as described above, could prevent the duplicate-sector-address part in area Y' from being read as in the first embodiment.

Area Y', though allocated only on the inner edge side of the disc in the example described above, may be allocated anywhere. Areas similar to area X and area Y' allocated on the inner edge side of the disc may be allocated also in an intermediate position of the disc (for example, area X1 and area Y'1 and/or on the outer edge side (for example, area X2 and area Y' 2). That is, the largest sector address in area X is equal to the sector address of all sectors in area Y, the largest sector address in area X1 is equal to the sector address of all sectors in area Y1, and the largest sector address in area X2 is equal to the sector address of all sectors in area Y2. It should be noted that, because those areas are allocated in different positions on the disc, the sector addresses of area X, area X1, and area X2 are different. This configuration makes it more difficult to illegally copy information.

Now, let the sector address n assigned to area X be an address in the Nth (N is a natural number) duplicate-sector-address part and let the sector address n assigned to the area Y' be an address in the (N+1)th duplicate-sector-address part. Then, from the description above, it is understood that, when area X and area Y' are allocated on the inner edge side of the disc, the Nth (=first) duplicate-sector-address part appears in area X and that the (N+1)th (=second) duplicate-sector-address part appears in area Y'.

In this case, in the (N+1)th duplicate-sector-address part that follows the Nth duplicate-sector-address part, the address equal to the last address, which is the largest address, of the Nth duplicate-sector-address part appears consecutively at least two times and, in addition, the Nth duplicate-sector-address part and the (N+1)th duplicate-sector-address part are consecutive on the recording track. This configuration makes it easier to read the duplicate-sector-address parts at sector read time.

Even if an attempt is made to illegally copy a CD-ROM to a CD-R, area Y' is not copied. Therefore, this sector arrangement completely prevents an illegal copy from being created on the CD-R and prevents the infringement of a copyright.

The above sector arrangement requires a modification to the authenticity checking program. In this case, the last sector address n of area X and the duplicate sector addresses n appearing from the area Z side to area Y' side are specified in advance. The authenticity checking program can judge authenticity by checking if the two data units constituting a pair of data corresponding to a pair of sector addresses differ.

The above sector arrangement requires a modification also to the sector reading program. Among the program steps of the sector reading program described with reference to FIG. 9, only step S74 and step S75 need be modified with no change in step S71 to step S73. The following describes only the modification to steps S74 and S75.

That is, in the modified step S74, when an address near the first sector address of area Y' is specified as the next target address, for example, from the sector address n+5 that is a predetermined sector address in area Z, the duplicate sector address appearing from the area Z side to the area Y' side is specified and the optical pickup 15 searches for the sector address n near the start of area Y' according to the data read order (5-2).

In addition, in the modified step S75, the optical pickup 15 searches for addresses and obtains data sequentially in the range, from the sector address n near the start of the area Y' described above to the last sector address of the same area Y', according to the data read order (5-3) and, after that, searches for addresses and obtains data in area Z that follows area Y'.

### <Second embodiment>.

FIG. 12A and 12B are diagrams showing a second embodiment of the present invention. FIG.12A shows the configuration of an entire information recording medium (CD-ROM) in the second embodiment of the present invention, and PIG.12B is a diagram showing a removable memory that may be optionally connected. FIG.13 is a configuration diagram showing how the removable memory shown in FIG.12B is connected to the controller in a CD-ROM drive.

The configuration of an entire information recording medium (CD-ROM) 2 in the second embodiment of the present invention shown in FIG. 12A is the same as that of the information recording medium (CD-ROM) 1 in the first embodiment described with reference to FIG.4 except some components. For convenience, only the new components, which are added to the first embodiment and to which new reference numerals are attached, will be described below.

As shown in FIG.12A, the information recording medium (hereinafter referred to as CD-ROM) 2 in the second embodiment of the present invention is composed of a lead-in area 2a, an ISO file system area 2b, a user data area 2o, and a lead-out area 2d which are formed on a spiral recording track running from the inner edge side to the outer edge side of a disk-shaped disc plate.

The second embodiment differs from the first embodiment in that an application software area is not provided between the ISO file system area 2b and the user data area 2c. In particular, the structure of a plurality of sectors recorded in the user data area 2c is entirely the same as that of the sectors in the first embodiment. The sector arrangement is also the same as that of the first embodiment and the modification of the first embodiment.

For use with the medium with the structure described above, an application software area is provided in an application software storage unit 3a and, in that area, at least the information recording medium authenticity checking program 50 shown in FIG. 8 and the information recording medium sector reading program 70 shown in FIG. 9 are stored. As shown in FIG.12B. the application software storage unit 3a is in a removable memory 3 optionally connectable to a portable CD-ROM drive 30 which has been improved as will be described later.

The removable memory 3 described above, similar to a card in shape, is composed primarily of the application software storage unit 3a such as an IC memory and a connector 3b used for electrical connection to the improved CD-ROM drive 30. The removable memory is optionally protected by a protective cover (not shown).

When the removable memory 3 is connected to the controller 11 in the improved CD-ROM drive 30 as shown in FIG. 13, the authenticity checking program 50 (FIG. 8) and the sector reading program 70 (FIG. 9) stored in the application software storage unit 3a are started by a command from the personal computer. The operation steps of the programs 50 and 70 are sent to the controller 11 that controls the optical pickup 15 according to the operation steps of the programs 50 and 70. Because the authenticity checking operation executed by the authenticity checking program 50 (FIG. 8) and the sector reading operation executed by the sector reading program 70 (FIG. 9) are entirely the same as those in the first embodiment, their description is omitted here.

Instead of connecting the removable memory 3 to the controller 11 in the improved CD-ROM drive 30, it is also possible to send the authenticity checking program 50 (FIG. B) and the sector reading program 70 (FIG. 9) to the controller 11 over an Internet line 31.

### <Applications of first and second embodiments>

Application I of the first and second embodiments is the same as the first and second embodiments except the following. When the authenticity checking program 50 shown in FIG.8 is used to check the authenticity of the CD-ROM 1 (or CD-ROM 2), the sector data X-2 corresponding to the sector address n-2 in area X is not obtained in step S51 in FIG.B. Instead, this sector data X-2 is pre-recorded in some other area on the disc and is obtained by the optical pickup 15 from the area for storing into the first memory M1.

Next, application II of the first and second embodiments executes the following when it uses the authenticity checking program 50 shown in FIG.8 to check the authenticity of the CD-ROM 1 (or CD-ROM 2). That is, application II uses application I of the first and second embodiments described above and, in step S54 in FIG. 8, reads the encrypted sector data Y-2 corresponding to the sector address n-2 in area Y, which is encrypted with the private key and stored in advance, and stores the data in the second memory M2. Then, the sector data X-2 recorded in some other area on the disc and stored in the first memory M1 by application I described above is arithmetically and logically associated with the sector data Y-2 encrypted and stored in the second memory M2. After that, when comparing the sector data X-2 with the sector, data Y-2 in step S56 in FIG. 8, they are compared to check if they are identical based on the arithmetically and logically associated information. If the disc is a copied disc (CD-R), a match is not found in the association and, therefore, the disc is determined as an illegally copied disc (CD-R).

In the first embodiment, modification of the first embodiment, second embodiment, and applications I and II of the first and second embodiments, the method for searching for sector addresses of a plurality of sectors on the CD-ROM 1 (or CD-ROM 2) is described. Other than sector addresses, the CD-ROM 1 (or CD-ROM 2) also has addresses called sub-codes. Whether the sub-code values should be varied according to sector addresses or should be varied independently depends on the function of the CD-ROM drive 10. Depending upon what CD-ROM drive 10 is used, it is also possible that the sub-code values, not the sector values, of the CD-ROM 1 (or CD-ROM 2) according to the present invention are varied as with the sector addresses described above.

The disclosed method for reading sectors from the CD-ROM 1 (or CD-ROM 2), in which sectors are read from area Y (or area Y') where some sector addresses are duplicate addresses of area X, reads sectors in the following order. The optical pickup 15 searches for a predetermined sector address in area Z whose sector address is larger than that of area Y (area Y') without reading areaY (or area Y') that follows area X, moves from this position into the inner edge side direction to area Y (or area Y') where some duplicate sector addresses are included and, after that, sequentially reads area Y (or area Y') and area Z in this order. It is also possible that the hardware of the CD-ROM drive 10 is remodeled to continuously read area X and area Y (or area Y') to obtain different sector data at the same sector address. Of course, this read method is included in the applications of the present invention.

Although the information recording medium according to the present invention is a CD-ROM in the above description, the present invention is not limited to a CD-ROM. The technical concept of the present invention may be applied also to a DVD-ROM or to a very-high-density information recording medium in the next generation.

The information recording medium according to the present invention, which has been described in detail above, is an information recording medium on which information signals are recorded on the signal surface of a disc plate across a plurality of sectors in units of sectors, each of the plurality of sectors having at least a sector address and sector data, wherein the plurality of sectors include a first sector part, which includes at least one sector, and a second sector part which includes at least one sector having a sector address equal to at least one sector in the first sector part but containing different sector data. Therefore, even if a user intentionally attempts to illegally copy the information signal (software) from the information recording medium (CD-ROM) according to the present invention to a CD-R, the sector data corresponding to the duplicate-sector-address part cannot be copied but is lost. Thus, discontinuous data, part of which is lost, is produced when the illegally copied CD-R is read but this data cannot be used. Because the illegal copy becomes meaningless, the present Invention completely prevents an illegal copy from being created on a CD-R and thus prevents the infringement of copyright.

On the information recording medium (CD-ROM) according to the present invention, a plurality of the second sector parts are provided near the first sector part. This makes it more difficult to create an illegal copy.

On the information recording medium (CD-ROM) according to the present invention, a plurality of pairs of the first sector part and the second sector part are provided, the plurality of pairs having sector addresses different from each other depending upon positions thereof on the disc plate. This makes it more difficult to create an illegal copy.

On the information recording medium (CD-ROM) according to the present Invention, consecutive sector addresses equal to those in the Nth (N is a natural number) duplicate-sector-address part are assigned to the (N+1)th duplicate-sector-address part or a sector address equal to the last sector address, which is largest, of addresses in the Nth duplicate-sector-address part is assigned consecutively at least twice. This makes it easy to search for an address in the duplicate-sector-address part.

On the information recording medium (CD-ROM) according to the present invention, consecutive sector addresses equal to those in the Nth (N is a natural number) duplicate-sector-address part are assigned to the (N+1)th duplicate-sector-address part or a sector address equal to the last sector address, which is largest, of addresses in the Nth. duplicate-sector-address part is assigned consecutively at least twice and, at the same time, error uncorrectable data is included in the sector data corresponding to the (N+1)th duplicate-sector-address part. This makes it easy to search for an address in the duplicate-sector-address part. In addition, even in a CD-ROM drive that does not check the sector address but outputs the specified number of sectors beginning at the start sector address, the present invention prevents sector data corresponding to the (N+1)th duplicate-sector-address part from being read.

The information recording medium authenticity checking method and the information recording medium authenticity checking program according to the present invention check the authenticity of the information recording medium (CD-ROM) according to the present invention described above by checking if the two units of data differ, wherein the two units of data constitute a pair of sector data corresponding to at least one of equal sector address pairs of the duplicate-sector-address parts. The information recording medium is judged as authentic if the two units constituting the pair of sector data differ; on the other hand, the information recording medium is judged as a copied disc (CD-R) if the two units constituting the pair of sector data match.

In addition, the information recording medium sector reading method and the information recording medium sector reading program read a plurality of sectors from the information recording medium (CD-ROM) according to the present invention described above by sequentially reading the sector data in ascending order of the sector addresses of the N-th (N is a natural number) duplicate-sector-address part; skipping over the (N+1)th duplicate-sector-address part; making a search from a position, where the sector address is larger than that of the duplicate-sector-address part that was skipped over, to a start of the (N+1)th duplicate-sector-addrees part; and sequentially reading the sector data in ascending order of the sector addresses from the start of the (N+1)th duplicate-sector-address part. Therefore, sector data corresponding to the duplicate-sector-address part may be read correctly.

It should be understood that many modifications and adaptations of the invention will become apparent to those skilled in the art and it is intended to encompass such obvious modifications and changes in the scope of the claims appended hereto.

## Claims

1. An information recording medium (1, 2a) on which information signals are recorded on a signal surface of a disc plate across a plurality of sectors in units of sectors, each of said plurality of sectors having at least a sector address and sector data,
wherein said plurality of sectors include a first sector part (area X) and a second sector part (area Y), said first sector part including at least one sector, said second sector part including at least one sector which has a sector address (n-4, n-3, n-2, n-1, n) equal to said at least one sector in the first sector part but contains different sector data (Y-4, Y-3, Y-2, Y-1, Y).

2. The information recording medium (1, 2a) according to claim 1,
wherein a plurality of said second sector parts are provided near said first sector part.

3. The information recording medium (1, 2a) according to claim 1 or 2,
wherein a plurality of pairs of said first sector part and said second sector part are provided, the plurality of pairs having sector addresses different from each other depending upon positions thereof on the disc plate.

4. The information recording medium (1, 2a) according to one of claims 1-3,
wherein, when each of said first sector part and said second sector part has a plurality of sectors and when there are a plurality of duplicate-sector-address parts (area X, area Y) including said first sector part (area X) and at least one second sector part (area Y), consecutive sector addresses (n-4, n-3, n-2, n-1, n) equal to those in the Nth (N is a natural number) duplicate-sector-address part are assigned to the (N+1)th duplicate-sector-address part or a sector address (n) equal to a last sector address, which is largest, of addresses in said Nth duplicate-sector-address part is assigned consecutively at least twice.

5. The information recording medium (1, 2a) according to one of claims 1-3,
wherein, when each of said first sector part and said second sector part has a plurality of sectors and when there are a plurality of duplicate-sector-address parts (area X, area Y) including said first sector part (area X) and at least one second sector part (area Y), consecutive sector addresses (n-4, n-3, n-2, n-1. n) equal to those in the Nth (N is a natural number) duplicate-sector-address part are assigned to the (N+1)th duplicate-sector-address part or a sector address (n) equal to a last sector address, which is largest, of addresses in said Nth duplicate-sector-address part is assigned consecutively at least twice and wherein error uncorrectable data is included in the sector data corresponding to the (N+1)th duplicate-sector-address part.

6. An information recording medium authenticity checking method for checking authenticity of the information recording medium (1, 2a) according to one of claims 1-5,
wherein, when there are a plurality of duplicate-sector-address parts (areaX, areaY) including said first sector part (area X) and at least one second sector part (area Y), the authenticity is judged by checking if two units of data differ, said two units of data constituting a pair of sector data (X-4, Y-4; for example) corresponding to at least one of equal sector address pairs (n-4, n-3, n-2, n-1, n) of the duplicate-sector-address parts.

7. An information recording medium authenticity checking program (50) for checking authenticity of the information recording medium (1, 2a) according to one of claims 1-5,
wherein, when there are a plurality of duplicate-sector-address parts (areaX, areaY) including said first sector part (area X) and at least one second sector part (area Y), an authenticity checking step is executed to see if two units of data differ, said two units of data constituting a pair of sector data (X-4, Y-4: for example) corresponding to at least one of equal sector address pairs (n-4, n-3, n-2, n-1. n) of the duplicate-sector-address parts.

8. An information recording medium sector reading method for reading the plurality of sectors recorded on the information recording medium (1, 2a) according to one of claims 1-5, wherein there are a plurality of duplicate-sector- address parts (area X, area Y) including said first sector part (area X) and at least one second sector part (area Y), said method comprising the steps of:
sequentially reading the sector data in ascending order of the sector addresses of the N-th (N is a natural number) duplicate-sector-address part (area X);
skipping over the (N+1)th duplicate-sector-address part (area Y);
making a search from a position, where the sector address is larger than that of the duplicate-sector-address part (area Y) that was skipped over, to a start of the (N+1)th duplicate-sector-address part (area Y); and
sequentially reading the sector data in ascending order of the sector addresses from the start of the (N+1)th duplicate-sector-address part (area Y).

9. An information recording medium sector reading program (60) for reading the plurality of sectors recorded on the information recording medium (1, 2a) according to one of claims 1-5, wherein there are a plurality of duplicate-sector-address parts (area X, area Y) including said first sector part (area X) and at least one second sector part (area Y), said program comprising the steps of;
sequentially reading the sector data in ascending order of the seotor addresses of the N-th (N is a natural number) duplicate-sector-address part (area X);
skipping over the (N+1)th duplicate-sector-address part (area Y);
making a search from a position, where the sector address is larger than that of the duplicate-sector-address part (area Y) that was skipped over, to a start of the (N+1)th duplicate-sector-address part (area Y); and
sequentially reading the sector data in ascending order of the sector addresses from the start of the (N+1)th duplicate-sector-address part (area Y).
